# EUROPEAN PATENT APPLICATION

(11) **EP 1 172 410 A2**
(43) Date of publication of application: **16.01.2002**
(21) Application number: 01115776.5
(22) Date of filing: 10.07.2001
(51) Int. Cl.: C08L 67/06, C08L 77/12, C08K 13/04

(54) **Unsaturated polyester molding composition**

(30) Priority: 11.07.2000 JP 2000210252; 27.03.2001 JP 2001090076
(71) Applicant: KAO CORPORATION, Chuo-ku, Tokyo (JP)
(72) Inventor: Yamaguchi, Takashi, Wakayama-shi, Wakayama (JP); Kawabe, Kuniyasu, Wakayama-shi, Wakayama (JP)
(74) Representative: HOFFMANN - EITLE

(57) **Abstract**

A molding composition comprising (A) a fibrous material, (B) an inorganic filler, at least one of (C) a radical polymerizable unsaturated polyester having an acid value of 3 to 60 KOHmg/g and (D) a radical polymerizable unsaturated polyester-polyamide having an acid value of 3 to 60 KOHmg/g, and (E) a radical generator, wherein component (B) has been internally added to at least one of component (C) and component (D) and a molding composition comprising (A) a fibrous material, at least one of (C) a radical polymerizable unsaturated polyester having an acid value of 3 to 60 KOHmg/g and (D) a radical polymerizable unsaturated polyester-polyamide having an acid value of 3 to 60 KOHmg/g, (E) a radical generator, and (F) a di- or higher valent metal salt of a fatty acid.

## Description

### FIELD OF THE INVENTION

This invention relates to a molding composition suitable for production of structural members typically including automobile interior materials, heat or sound insulators used in buildings, aircrafts, trains, ships, etc., sound absorbers of air conditioners, and the like. Besides, this invention relates to a resin composition which is used as a molding material.

### BACKGROUND OF THE INVENTION

Structural members typically including automobile interior materials, heat or sound insulators used in buildings, aircrafts, trains, ships, etc., sound absorbers of air conditioners, and the like are produced from molding compounds mainly comprising fiber, a phenolic resin, and an amine curing agent to secure sufficient strength (see, for example, JP-A-57-55962 (The term "JP-A" as used herein means an "unexamined published Japanese patent application") and JP-A-7-1666). However, phenolic resins react or decompose to produce formaldehyde, which gives rise to a safety problem. Further, the amine curing agent has the problem of smell.

A resin composition comprising a non-crystalline unsaturated polyester and an ethylenically unsaturated group-containing monomer having compatibility with the unsaturated polyester and a molding composition comprising the resin composition and a radical generator are known (see JP-B-2-31090 (The term "JP-B" as used herein means an "examined Japanese patent application")). Acting as a crosslinking agent, the ethylenically unsaturated group-containing monomer compatible with an unsaturated polyester, such as styrene, brings about improved strength but has the problems of smell and safety.

A molding composition comprising an unsaturated polyester resin containing an ethylenically unsaturated group-containing monomer, such as styrene, and a radical generator, having further incorporated therein an inorganic filler, such as calcium carbonate or aluminum hydroxide, is also known as a molding material providing a molded article with enhanced strength and yet inexpensive (see *Filler Katuyo Jiten*, Taiseisha (1994)). However, application of an inorganic filler to a system containing an organic fibrous material encounters difficulty because of poor compatibility of the inorganic filler to the fibrous material particularly where liquid such as styrene is not used from considerations of smell, often resulting in a failure to secure uniform strength.

### SUMMARY OF THE INVENTION

An object of the present invention is to provide a molded article which has sufficient strength and heat resistance for practical use and improved safety and smell and yet is competitive in price.

Another object of the present invention is to provide a molding composition suitable for producing such a molded article.

Still another object of the invention is to provide a resin composition which can be used suitably as a molding material.

The present invention provides, in its first aspect, a molding composition comprising (A) a fibrous material, (B) an inorganic filler, at least one of (C) a radical polymerizable unsaturated polyester having an acid value of 3 to 60 KOHmg/g and (D) a radical polymerizable unsaturated polyester-polyamide having an acid value of 3 to 60 KOHmg/g, and (E) a radical generator, wherein component (B) has been internally added to at least one of component (C) and component (D) .

The present invention provides, in its second aspect, a molding composition comprising (A) a fibrous material, at least one of (C) a radical polymerizable unsaturated polyester having an acid value of 3 to 60 KOHmg/g and (D) a radical polymerizable unsaturated polyester-polyamide having an acid value of 3 to 60 KOHmg/g, (E) a radical generator, and (F) a di- or higher valent metal salt of a fatty acid.

The invention also provides, in its third aspect, a molded article obtained by molding the molding composition according to the first or second aspect of the invention.

The invention additionally provides, in its fourth aspect, a resin composition comprising at least one of (C) an unsaturated polyester and (D) an unsaturated polyester-polyamide having (B) an inorganic filler internally added thereto.

### DETAILED DESCRIPTION OF THE INVENTION

The molding composition according to the first aspect of the present invention is characterized by using a resin composition comprising at least one of an unsaturated polyester having a specific acid value and an unsaturated polyester-polyamide having a specific acid value and an inorganic filler, wherein the inorganic filler has been internally added to at least one of the unsaturated polyester and the unsaturated polyester-polyamide. This resin composition used for a molding material provides a molded article with sufficient strength and heat resistance for practical use, free from the problems of formaldehyde generation and smell and yet competitive in price.

The molding composition according to the second aspect of the invention is characterized by comprising an unsaturated polyester and/or an unsaturated polyester-polyamide which have a specific acid value, and a di- or higher valent metal salt of a fatty acid. Containing the resin and the fatty acid metal salt, the molding composition is considered to form a coordinate bond between the carboxyl group of the resin and the metal of the metal salt in its molten state when, for example, molded under heat, thereby providing a high-strength molded article. An inorganic filler added to a conventional resin composition containing a fibrous material for improving molded article strength has failed to achieve uniform strength because the inorganic filler is not uniformly dispersed due to poor compatibility with the fibrous material. This disadvantage is eliminated in the second aspect because the fatty acid metal salt also serves to improve compatibility between the inorganic filler and the fibrous material. Therefore, the second aspect encompasses, as a preferred embodiment thereof, a molding composition comprising an inorganic filler in addition to the resin(s) and the fatty acid metal salt, which synergistically exhibits a strength improving effect through formation of a coordinate bond between the carboxyl group and the metal and a uniform strength improving effect by the inorganic filler to provide a molded article with excellent strength and heat resistance.

The fibrous material which can be used as component (A) includes, but is not limited to, inorganic fibers such as glass fiber and organic fibers such as synthetic resin fibers, e.g., nylon and polyethylene terephthalate, and natural fibers, e.g., cotton, flax, wool, silk, and wood fiber. Organic fibers are preferred from the standpoint of flexibility and heat insulation of a molded article, for example, a molded plate. Inorganic fiber and organic fiber can be used in combination. Component (A) can be used in the form of yarn or fabric, either woven or nonwoven.

As noted above, it is preferred for the molding composition according to the second aspect of the invention to contain an inorganic filler as component (B) so as to produce synergistically a strength improving effect through formation of a coordinate bond between the carboxyl group of components (C) and/or (D) and the metal of component (F) and a strength improving effect by the inorganic filler.

The inorganic filler as component (B) includes, but is not limited to, calcium carbonate, aluminum hydroxide, magnesium hydroxide, magnesium oxide, talc, mica, silica, kaolin, clay, titanium oxide, alumina, zinc oxide, barium sulfate, and glass frit. These inorganic filler may be surface treated with various coupling agents. Preferred of the inorganic fillers are calcium carbonate, alumina and talc for their inexpensiveness and effectiveness on strength improvement.

While the above-recited inorganic fillers are commonly employed in molded articles, they will separate when merely added to a resin composition containing a fibrous material on account of theirpoor compatibility with the fibrous material, resulting in a failure to produce their effects as desired.

To solve this problem, the molding composition according to the first aspect of the invention uses (C) an unsaturated polyester and/or (D) an unsaturated polyester-polyamide into which component (B) has previously been incorporated, i.e., internally added.

In the molding composition of the second aspect, on the other hand, the inorganic filler shows improved compatibility with the fibrous material by the action of the fatty acid metal salt so that it can be uniformly dispersed in the molding composition to manifest its effect as expected in the resulting molded article.

The manner of internally adding the inorganic filler to the resinous components (C) and/or (D) is not particularly restricted as far as the inorganic filler can be dispersed sufficiently. For example, the inorganic filler can be added to the system for synthesizing the resin or to the synthesized resin in a molten state, or it can be added to a resin solution followed by solvent removal. For simplicity, it is advantageous to add the inorganic filler to a molten resin. The resulting resin composition comprising components (C) and/or (D) having component (B) internally added thereto is suitable as a molding material, especially as a resin composition to provide the molding composition of the present invention.

It is preferred for the inorganic filler to have an average particle size of 0.1 to 50 µm, particularly 0.1 to 30 µm, for satisfactory dispersibility in the resin and also for manifestation of strength in molded articles. The average particle size is measured with a laser diffraction particle size analyzer SALD-2000J, supplied by Shimadzu Corp.

Where an inorganic filler is used in the second aspect of the invention, desired effects of the inorganic filler will be manifested only if it is uniformly dispersed in the molding composition owing to the action of component (F) irrespective of whether it is added to the resinous component internally or externally. That is, the second aspect of the invention includes (1) an embodiment in which the resin, the fatty acid metal salt, and the inorganic filler are merely mixed up in a usual manner to uniformly disperse the inorganic filler by the action of the fatty acid metal salt (external addition of the inorganic filler to the resin) or (2) an embodiment in which the inorganic filler is previously incorporated into a resin in which it is easily dispersible (internal addition of the inorganic filler to the resin).

The radical polymerizable unsaturated polyester as component (C) is not particularly limited as long as it carries a radical polymerizable unsaturated bond and has an acid value of 3 to 60 KOHmg/g. A preferred acid value of component (C) is 5 to 50 KOHmg/g, particularly 8 to 50 KOHmg/g. If the acid value of component (C) is less than 3 KOHmg/g, formation of a coordinate bond between the carboxyl group and the metal is not sufficient. The upper limit of the acid value is 60 KOHmg/g from the viewpoint of moisture resistance of the resulting molded article. The acid value is measured in accordance with JIS K0070.

The monomers providing component (C) are not particularly limited and comprise, for example, at least one of di- or higher polyhydric alcohol component, at least one carboxylic acid component, such as a di- or higherpolycarboxylic acid or an anhydride or an ester thereof, and, if necessary, at least one radical polymerizable unsaturated group-containing monomer. The radical polymerizable unsaturated group-containing monomer is essentially required where neither the alcohol component nor the carboxylic acid component contains a radical polymerizable unsaturated bond.

Dihydric alcohol components include a bisphenol A-alkylene oxide adduct (containing 2 to 4 carbon atoms in the alkylene moiety; average mole number of alkylene oxide added: 1 to 10), ethylene glycol, propylene glycol, 1,6-hexanediol, 1, 4-butanediol, bisphenol A, and hydrogenated bisphenol A. Preferred of them are a bisphenol A-alkylene oxide adduct (containing 2 or 3 carbon atoms in the alkylene moiety; average mole number of alkylene oxide added: 2 to 5), ethylene glycol, 1,4-butanediol, and hydrogenated bisphenol A. The alkylene oxide to be added is preferably ethylene oxide or propylene oxide. Two or more kinds of alkylene oxides may be added.

Tri- or higher polyhydric alcohol components include sorbitol, 1,4-sorbitan, pentaerythritol, glycerol, and trimethylolpropane, with glycerol and trimethylolpropane being preferred.

The dicarboxylic acid components include various dicarboxylic acids and succinic acid which is substituted with an alkyl group having 1 to 20 carbon atoms or an alkenyl group having 1 to 20 carbon atoms, anhydrides of these acids, and alkyl esters of these acids having 1 to 12 carbon atoms in the alkyl moiety thereof. Maleic acid, fumaric acid, terephthalic acid, and C₂₋₂₀ alkenyl-substituted succinic acids (e.g., octenylsuccinic anhydride or dodecenylsuccinic anhydride) are preferred.

Tri- or higher polycarboxylic acids include 1,2,4-benzenetricarboxylic acid (trimellitic acid), an anhydride thereof, and an alkyl ester thereof having 1 to 12 carbon atoms in the alkyl moiety.

The radical polymerizable unsaturated group-containing monomers include fumaric acid, maleic acid, maleic anhydride, and itaconic acid, with fumaric acid and maleic anhydride being preferred.

The radical polymerizable unsaturated polyester-polyamide as component (D) is not particularly restricted as long as it has a radical polymerizable unsaturated bond and an acid value of 3 to 60 KOHmg/g. A preferred acid value of component (D) is 5 to 50 KOHmg/g, particularly 8 to 50 KOHmg/g. If the acid value of component (D) is less than 3 KOHmg/g, formation of a coordinate bond between the carboxyl group and the metal is not sufficient. The upper limit of the acid value is 60 KOHmg/g from the viewpoint of moisture resistance of the resulting molded article.

Component (D) can be obtained from a monomer mixture comprising an amine monomer in addition to the monomers used to prepare component (C). Examples of the amine monomers include various known polyamines, aminocarboxylic acids, amino alcohols, and lactams. Preferred amine monomers are m-xylenediamine, ethylenediamine, hexamethylenediamine, xylylenediamine, and ε-caprolactam. The amine monomers can be used either individually or as a mixture of two or more thereof.

It is desirable that each of components (C) and (D) be prepared from a monomer mixture comprising at least 20% by weight, particularly 30% by weight or more, especially 35 to 50% by weight, of at least one radical polymerizable unsaturated group-containing monomer based on the respective total constituent monomers. A molding composition comprising such components (C) and/or (D) exhibits satisfactory molding properties to provide a uniform molded article with further improved strength in ambient temperature and high temperature. The radical polymerizable unsaturated group-containing monomer(s) and the above-described other constituent monomers make 100% by weight. One or more kinds of component (C) and/or one or more kinds of component (D) can be used in combination.

Component (C) and component (D) can be prepared by allowing the respective monomer mixture to react at 150 to 250°C for 5 to 20 hours in a nitrogen atmosphere. Component (C) and component (D) may be either a linear polymer or a nonlinear polymer. It is acceptable to use a monohydric alcohol component or a monocarboxylic acid component for molecular weight regulation, to use a generally used catalyst for esterification, such as dibutyltin oxide, for reaction acceleration, and to use a radical trapping agent, such as hydroquinone, for preventing radical polymerization from occurring during the preparation of component (C) or (D).

It is preferred for each of components (C) and (D) to have an iodine value of 40 or greater, still preferably 50 or greater, particularly 60 to 130, especially 70 to 130, to secure strength of molded articles. The iodine value is determined in accordance with JIS K0070.

It is preferred for each of components (C) and (D) to have a softening point of 80°C or higher, particularly 80 to 130°C, for securing melting properties in molding and storage stability of the molding composition. The softening point is measured with a Koka type flow tester manufactured by Shimadzu Corp. under conditions of a load of 196 N, an orifice diameter of 1 mm, an orifice length of 1 mm, and a rate of temperature rise of 3°C/min. The temperature at which a half of a sample resin flows out of the orifice is taken as a softening point.

The polymers as component (C) or (D) may be either crystalline or non-crystalline. Those having crystallinity preferably have a melting point of 90° to 160°C as a main temperature peak of the DSC curve measured at a heating rate of 10°C/min in an onset method and a melt viscosity of 100 Pa·s or less at a temperature higher than that melting point by 20°C. The melt viscosity is measured with a Koka type flow tester (supplied by Shimadzu Corp.) or a rheometer (supplied by Rheometrics Inc.).

The radical generator as component (E) includes peroxides, persulfates, and azo compounds. Peroxides and persulfates are preferred for less gas generation. Examples of preferred radical generators are benzoyl peroxide, lauroyl peroxide, di-t-butyl peroxide, dicumyl peroxide, 1,3-bis(t-butylperoxyisopropyl)benzene, 1,3-di(2-isopropylperoxyisopropyl)benzene, ammonium persulfate, and sodium persulfate. It is preferred for the radical generator as component (E) to have a half-life of 7 days or longer at 40°C to secure the storage stability and the like of the molding composition. Taking the molding time into consideration, a still preferred half-life is within 10 minutes at 250°C.

The fatty acid metal salt as component (F) is not particularly limited as long as it has two or more valency. A monovalent metal salt cannot form a coordinate bond between the metal thereof and the carboxyl group of components (C) and/or (D) that is effective in improving the strength, failing to obtain the desired effects.

The fatty acid moiety of component (F) includes, but is not limited to, coconut oil fatty acid, beef tallow fatty acid, and various single fatty acids. Examples of the single fatty acids include saturated ones such as caprylic acid, capric acid, undecylic acid, lauric acid, tridecylic acid, myristic acid, palmitic acid, stearic acid, behenic acid, lignoceric acid, cerotic acid, and montanic acid; unsaturated ones such as oleic acid, elaidic acid, linolic acid, linoleic acid, and erucic acid; hydroxy-containing fatty acids such as ricinoleic acid and dihydroxystearic acid; cyclic fatty acids; and dibasic fatty acids. From the standpoint of compatibility improvement, it is preferred for the fatty acid moiety to comprise 90% by weight or more of saturated fatty acids having a straight alkyl group having 18 or more carbon atoms.

The di- or polyvalent metal of component (F) includes zinc, lead, iron, copper, tin, cadmium, aluminum, calcium, magnesium, nickel, cobalt, manganese, and barium. Particularly preferred fatty acid metal salts are zinc laurate, zinc stearate, aluminum stearate, calcium stearate, and magnesium stearate. The fatty acid metal salts can be used either individually or as a mixture of two or more thereof.

In order to accelerate formation of a coordinate bond between the metal of component (F) and the carboxyl group of components (C) and/or (D), component (F) is preferably used as internally incorporated into components (C) and/or (D) . That is, it is a preferred embodiment that component (F) be previously mixed into components (C) and/or (D) by use of a mixer, etc., or previously kneaded with a molten resin as components (C) and/or (D), or added to the final stage of polymerization in the preparation of components (C) and/or (D).

As long as the effects of the present invention are not impaired, the molding composition can contain known additives, such as a curing aid (e.g., diallyl phthalate or triallyl phthalate), a lubricant (e.g., aliphatic acid amide wax or synthetic wax) and so forth.

The compounding ratios of the components are not particularly limited as long as the molded articles obtained have sufficient strength and heat resistance for practical use. The language "sufficient strength for practical use" is intended to mean that the molded article has a normal temperature flexural strength of 100 kg/cm² or higher, preferably 120 kg/cm² or higher, as measured in accordance with JIS K6911. The language "sufficient heat resistance for practical use" is intended to mean that the heat resistance of the molded article is such that no warpage results in 120°C heat resistance evaluation described in Examples hereinafter given.

Specifically, from the viewpoint of specific gravity and strength of the molded article, a preferred content of component (A) is 29 to 99% by weight, particularly 50 to 98.9% by weight, based on the total composition. A preferred total content of components (C) and (D) is 0.5 to 70% by weight, particularly 0.9 to 50% by weight, based on the total composition from the viewpoint of strength and specific gravity of the molded article. A preferred content of component (E) is 0.1 to 30% by weight, particularly 0.1 to 20% by weight, based on the total composition, from the standpoint of molded article strength. A preferred content of component (F) is 0.1 to 10% by weight, particularly 0.3 to 8% by weight, for securing molded article strength. A preferred content of component (B) is 0.1 to 200 parts by weight, particularly 0.5 to 150 parts by weight, especially 1 to 100 parts by weight, per 100 parts by weight of components (C) and/or (D), from considerations of strength and price of the molded article.

The amounts of the additives optionally incorporated, such as a curing aid and a lubricant, can be selected appropriately to obtain the desired effects as is consistent with the object of the present invention.

The molding composition of the invention is prepared in a usual manner, for example, by compounding the components other then component (A) in a Henschel mixer, a fluidized bed mixer, and the like, and the mixture is then mixed with component (A).

Known molding methods can be adopted with no particularly restriction for obtaining molded articles of the present invention from the above-mentioned molding composition, such as compression molding, laminated molding, injection molding, and extrusion. The composition may be preheated by preliminary heating or by heating to shorten the molding cycle time.

The molded article according to the invention exhibits sufficient strength for practical use and also satisfactory heat resistance and are therefore suited for use as structural members typically including automobile interior materials, heat or sound insulators used in buildings, aircrafts, trains, ships, etc., sound absorbers of air conditioners, and the like.

The present invention will now be illustrated in greater detail with reference to Preparation Examples and Examples, but it should be understood that the invention is not limited thereto.

### PREPARATION EXAMPLE 1

A mixture of 2275 g (6.5 mol) of a bisphenol A-propylene oxide (average number of moles added: 2.1) adduct, 1200 g (5 mol) of hydrogenated bisphenol A, 527 g (8.5 mol) of ethylene glycol, 2366 g (20.4 mol) of fumaric acid, 16 g of dibutyltin oxide, and 0.6 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The resulting resin was found to be an unsaturated polyester resin having an iodine value of 74.0 and a softening point of 106°C. The resin was designated resin 1.

### PREPARATION EXAMPLE 2

Resin 1 (1500 g) was melted at 190°C in a nitrogen atmosphere, and 500 g of calcium carbonate (Whiton 305, available from Shiraishi Kogyo K.K.; average particle size: 3.6 µm) was added to the molten resin. The mixture was stirred for 1 hour and cooled. The resulting resin composition was designated resin 2.

### PREPARATION EXAMPLE 3

A mixture of 1300 g (4 mol) of a bisphenol A-ethylene oxide (average number of moles added: 2.1) adduct, 960 g (4 mol) of hydrogenated bisphenol A, 540 g (6 mol) of 1,4-butanediol, 1650 g (14.3 mol) of fumaric acid, and 0.4 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The resulting resin was an unsaturated polyester resin having an iodine value of 73.4 and a softening point of 108°C. The resin was designated resin 3.

### PREPARATION EXAMPLE 4

Resin 3 (1800 g) was melted at 190°C in a nitrogen atmosphere, and 200 g of aluminum hydroxide (H-32, available from Showa Denko K.K.; average particle size: 8 µm) was added to the molten resin. The mixture was stirred for 1 hour and cooled. The resulting resin composition was designated resin 4.

### PREPARATION EXAMPLE 5

A mixture of 700 g (2 mol) of a bisphenol A-propylene oxide (average number of moles added: 2.1) adduct, 217 g (3.5 mol) of ethylene glycol, 840 g (3.5 mol) of hydrogenated bisphenol A, 136 g (1 mol) of m-xylenediamine, 1009 g (10.3 mol) of maleic anhydride, and 0.4 g of hydroquinone was allowed to react at 160°C for 4 hours in a nitrogen atmosphere . The temperature was raised up to 200°C, and the reaction was continued under atmospheric pressure for 1 hour and then under reduced pressure of 9.33 kPa for another 1 hour. The resulting resin was an unsaturated polyester-polyamide resin having an iodine value of 74.6 and a softening point of 110°C. The resin was designated resin 5.

### PREPARATION EXAMPLE 6

Resin 5 (1600 g) was melted at 190°C in a nitrogen atmosphere, and 400 g of calcium carbonate (BF-100, available from Bihokufunka Kogyo K.K.; average particle size: 3.5 µm) was added to the molten resin. The mixture was stirred for 1 hour and cooled. The resulting resin composition was designated resin 6.

### PREPARATION EXAMPLE 7

Amixture of 1750 g (5 mol) of a bisphenol A-propylene oxide (average number of moles added: 2.1) adduct, 1440 g (6 mol) of hydrogenated bisphenol A, 558 g (9 mol) of ethylene glycol, 2000 g (20.4 mol) of maleic anhydride, 15 g of dibutyltin oxide, and 0.6 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The pressure was increased to atmospheric pressure, and the reaction mixture was cooled to 190°C. To the resulting resin was added 1300 g of calcium carbonate (BF-100), and the mixture was stirred at 190°C for 1 hour, followed by cooling to obtain an unsaturated polyester resin having an iodine value of 77.3 and a softening point of 108°C which had calcium carbonate internally incorporated therein. The resin was designated resin 7.

### EXAMPLES 1 TO 4 AND COMPARATIVE EXAMPLES 1 TO 3

Each of resins 2, 4, 6 and 7 prepared in Preparation Examples 2, 4, 6 and 7, which were component (C) or (D) having component (B) internally incorporated therein, were ground to powder having a particle size of 30 to 200 µm. For comparison, resins 1, 3 and 5 were each ground in the same manner, and the inorganic filler shown in Table 1 below was mixed with the resin powder (externally addition). Pieces of cotton threads were used as a fibrous material (component (A)), and 1,3-di(2-isopropylperoxyisopropyl)benzene was used as a radical generator (component (E)). These components (A) to (E) were compounded in the ratio shown in Table 1 to prepare a molding compound.

The compound was put in between mirror-finished stainless steel plates, placed in a hot press set at 190°C and hot pressed under a contact pressure of 15 kgf/cm² (147 N/cm²) for 1 minute to obtain a 5 cm wide, 20 cm long, and 6 mm thick plate.

**TABLE 1**

| Component (part by weight) | | Example | | | | Comparative Example | | |
|---|---|---|---|---|---|---|---|---|
| | | 1 | 2 | 3 | 4 | 1 | 2 | 3 |
| (A) | | 82 | 82 | 82 | 82 | 82 | 82 | 82 |
| (C) or (D) + internally added (B) | resin 2 | 12.75 +4.25 | | | | | | |
| | resin 4 | | 15.3+ 1.7 | | | | | |
| | resin 6 | | | 13.6+ 3.4 | | | | |
| | resin 7 | | | | 13.9+ 3.1 | | | |
| (C) and/or (D) + externally added (B) | resin 1 | | | | | 12.75 | | |
| | Whiton 305 | | | | | 4.25 | | |
| | resin 3 | | | | | | 15.3 | |
| | H-32 | | | | | | 1.7 | |
| | resin 5 | | | | | | | 13.6 |
| | BF-100 | | | | | | | 3.4 |
| (E) | | 1 | 1 | 1 | 1 | 1 1 | | 1 |

The molded plate was evaluated in a normal temperature flexural strength test in accordance with JIS K6911. Further, the plate was subjected to 120°C heat resistance evaluation. The results obtained are shown in Table 2. In any case no irritating smell was generated in the 120°C heat resistance evaluation. Further, when the molded article was kept in a desiccator for 24 hours, and the gas was then sucked from the desiccator, no formaldehyde was detected with a formalin gas detection tube.

In the 120°C heat resistance evaluation, the molded plate was left to stand in an oven at 120°C for 2 hours with a 20 g weight put on the center thereof. The plate taken out of the oven was placed on a horizontal mount with the center being in contact with the mount, and the warpage (the distance of the periphery from the mount) was measured. The heat resistance was rated on the following A-to-D scale according to the warpage.
- A: No warpage.
- B: The warpage is less than 1 mm.
- C: The warpage is less than 2.5 mm.
- D: The warpage is 2.5 mm or more.

**TABLE 2**

| | Normal Temp. Flexural Strength (kg/cm²) | 120°C Heat Resistance |
|---|---|---|
| Example 1 | 170 | A |
| Example 2 | 165 | A |
| Example 3 | 175 | A |
| Example 4 | 175 | A |
| Compara. Example 1 | 95 | B |
| Compara. Example 2 | 90 | B |
| Compara. Example 3 | 95 | B |

It is seen from the results in Table 2 that all the molded plates of Examples 1 to 4 have sufficient strength and heat resistance for practical use as compared with those of Comparative Examples 1 to 3.

### PREPARATION EXAMPLE 8

A mixture of 2100 g (6 mol) of a bisphenol A-propylene oxide (average number of moles added: 2.1) adduct, 1320 g (5.5 mol) of hydrogenated bisphenol A, 527 g (8.5 mol) of ethylene glycol, 2366 g (20.4 mol) of fumaric acid, 16 g of dibutyltin oxide, and 0.6 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The resulting resin was found to be a radical polymerizable non-crystalline unsaturated polyester resin having an acid value of 32 KOHmg/g, an iodine value of 75.0, and a softening point of 110°C. The resin was designated resin 8.

### PREPARATION EXAMPLE 9

A mixture of 6500 g (20 mol) of a bisphenol A-ethylene oxide (average number of moles added: 2.1) adduct, 2000 g (20.4 mol) of maleic anhydride, and 0.9 g of hydroquinone was allowed to react at 160°C for 4 hours in a nitrogen atmosphere . The temperature was raised up to 200°C, and the reaction was continued under atmospheric pressure for 1 hour and then under reduced pressure of 9.33 kPa for another 1 hour. The resulting resin was found to be a radical polymerizable non-crystalline radical polymerizable unsaturated polyester resin having an acid value of 20 KOHmg/g, an iodine value of 50, and a softening point of 98°C. The resin was designated resin 9.

### PREPARATION EXAMPLE 10

A mixture of 7000 g (20 mol) of a bisphenol A-propylene oxide (average number of moles added: 2.1) adduct, 2413 g (20.8 mol) of fumaric acid, 20 g of dibutyltin oxide, and 0.9 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The resulting resin was found to be a radical polymerizable non-crystalline unsaturated polyester resin having an acid value of 45 KOHmg/g, an iodine value of 45, and a softening point of 100°C. The resin was designated resin 10.

### PREPARATION EXAMPLE 11

A mixture of 650 g (2 mol) of a bisphenol A-ethylene oxide (average number of moles added: 2.1) adduct, 217 g (3.5 mol) of ethylene glycol, 840 g (3.5 mol) of hydrogenated bisphenol A, 136 g (1 mol) of m-xylenediamine, 1009 g (10.3 mol) of maleic anhydride, and 0.4 g of hydroquinone was allowed to react at 160°C for 4 hours in a nitrogen atmosphere. The temperature was raised up to 200°C, and the reaction was continued under atmospheric pressure for 1 hour and then under reduced pressure of 9.33 kPa for another 1 hour. The resulting resin was a radical polymerizable non-crystalline unsaturated polyester-polyamide resin having an acid value of 25 KOHmg/g, an iodine value of 78.6, and a softening point of 105°C. The resin was designated resin 11.

### PREPARATION EXAMPLE 12

Resin 8 (1500 g) was melted at 190°C in a nitrogen atmosphere, and 860 g of calcium carbonate (BF-100, available from Bihokufunka Kogyo K.K.; average particle size: 3.5 µm) was added to the molten resin. The mixture was stirred for 1 hour and cooled. The resulting resin composition having calcium carbonate (component (B)) internally incorporated therein was designated resin 12.

### EXAMPLES 5 TO 11 AND COMPARATIVE EXAMPLES 4 AND 5

Each of resins 8 to 12 prepared in Preparation Examples 8 to 12, which were component (C) or (D) with or without component (B) internally incorporated therein, were ground to powder having a particle size of 30 to 200 µm. Pieces of threads obtained from cut cotton cloth were used as a fibrous material (component (A)). 1,3-bis(t-butylperoxyisopropyl)benzene (Perkadox 14, available from Kayaku Akzo) was used as a radical generator (component (E) ) . Zinc stearate (S-Z, available from NOF Corp.), aluminum stearate (SA-1000, available from Sakai Chemical Industry Co., Ltd.) or lithium stearate (S-7000, available from Sakai Chemical Industry Co., Ltd.) was used as a fatty acid metal salt (component (F) ) . Calcium carbonate (BF-100, available from Bihokufunka Kogyo K.K.; average particle size: 3.5 µm) or aluminum hydroxide (H-320, available from Showa Denko K.K.; average particle size: 10 µm) was used as an inorganic filler (component (B) ) . These components except component (A) were blended in a Henschel mixer in the ratio shown in Table 3 below, and the mixture was mixed with component (A) in a polyethylene bag to prepare a molding compound. In Examples 9 and 10, component (F) was externally added to the resin, while in Example 11 component (F) was internally added to the resin. In Table 3, the amount of component (B) shown in parentheses (Example 11) is the amount present in resin 12.

The molding compound was put in between mirror-finished stainless steel plates, placed in a hot press set at 190°C with a 6 mm thick spacer, and hot pressed under a contact pressure of 15 kgf/cm² (1.47 MPa) for 1 minute to obtain a 5 cm wide, 20 cm long, and 6 mm thick plate.

The resulting plate was evaluated for normal temperature flexural strength and 120°C heat resistance in the same manner as in Examples 1 to 4. The results obtained are shown in Table 3. In any case no irritating smell was generated in the 120°C heat resistance evaluation. Further, when the molded article was kept in a desiccator for 24 hours, and the gas was then sucked from the desiccator, no formaldehyde was detected with a formalin gas detection tube.

**TABLE 3**

| Component (part by weight) | | Example | | | | | | | Comp. Ex. | |
|---|---|---|---|---|---|---|---|---|---|---|
| | | 5 | 6 | 7 | 8 | 9 | 10 | 11 | 4 | 5 |
| (A) | | 82 | 82 | 82 | 82 | 82 | 82 | 82 | 82 | 82 |
| (B) | BF-100 | | | | | 6 | | (6) | | |
| | H-320 | | | | | | 8 | | | |
| (C) or (D) | resin 8 | 16 | | | | 10.4 | | | | |
| | resin 9 | | 16 | | | | 8.5 | | 16 | 16 |
| | resin 10 | | | | 16 | | | | | |
| | resin 11 | | | 16 | | | | | | |
| | resin 12 | | | | | | | 16.4 | | |
| | (E) | 1 | 1 | 1 | 1 | 0.6 | 0.5 | 0.6 | 1 | 1 |
| (F) | S-Z | 1 | | 1 | 1 | | 1 | 1 | | |
| | SA-1000 | | 1 | | | 1 | | | | |
| | S-7000 | | | | | | | | | 1 |
| Normal Temp. Flexural Strength (kg/cm²) | | 170 | 165 | 175 | 180 | 170 | 170 | 175 | 110 | 100 |
| 120°C Heat Resistance | | A | A | A | A | A | A | A | B | B |

As is apparent from the results in Table 3, all the molded plates of Examples 5 to 11 have sufficient strength and heat resistance for practical use as compared with those of Comparative Example 4 which does not contain component (F) and Comparative Example 5 which uses a fatty acid monovalent metal salt as component (F). It is also understood from the results of Examples 9 to 11 that the molding composition of the present invention which contains an inorganic filler in combination with component (F) also provides an excellent molded article notwithstanding the small resin content irrespective of whether the inorganic filler is added externally or internally.

The present invention provides a molded article which has sufficient strength and heat resistance for practical use and improved safety and smell and yet is competitive in price and a molding composition producing such an excellent molded article.

While the invention has been described in detail and with reference to specific examples thereof, it will be apparent to one skilled in the art that various changes and modifications can be made therein without departing from the spirit and scope thereof.

The entire disclosure of each and every foreign patent application from which the benefit of foreign priority has been claimed in the present application is incorporated herein by reference, as if fully set forth herein.

## Claims

1. A molding composition comprising the components of:
(A) a fibrous material;
(B) an inorganic filler;
at least one of (C) a radical polymerizable unsaturated polyester having an acid value of 3 to 60 KOHmg/g and (D) a radical polymerizable unsaturated polyester-polyamide having an acid value of 3 to 60 KOHmg/g; and
(E) a radical generator,
wherein the component (B) has been internally added to at least one of the components (C) and (D).

2. A molding composition comprising the components of:
(A) a fibrous material;
at least one of (C) a radical polymerizable unsaturated polyester having an acid value of 3 to 60 KOHmg/g and (D) a radical polymerizable unsaturated polyester-polyamide having an acid value of 3 to 60 KOHmg/g;
(E) a radical generator; and
(F) a di- or higher valent metal salt of a fatty acid.

3. The molding composition according to claim 1, wherein the component (B) has an average particle size of 0.1 to 50 µm.

4. The molding composition according to claim 1, which comprises 29 to 99% by weight of the component (A), 0.5 to 70% by weight, in total, of the components (C) and (D), 0.1 to 30% by weight of the component (E), each based on the total composition, and 0.1 to 70 parts by weight of the component (B) per 100 parts by weight of the total of the components (C) and (D) .

5. The molding composition according to claim 2, which comprises 29 to 99% by weight of the component (A), 0.5 to 70% by weight, in total, of the components (C) and (D), 0.1 to 30% by weight of the component (E), and 0.1 to 10% by weight of the component (F) each based on the total composition.

6. The molding composition according to claim 2, which further comprises the component of (B) an inorganic filler.

7. The molding composition according to claim 6, wherein the component (B) is present in an amount of 0.1 to 200 parts by weight per 100 parts by weight of the total of the components (C) and (D).

8. The molding composition according to claim 6, wherein the component (B) has an average particle size of 0.1 to 50 µm.

9. The molding composition according to claim 2, wherein the component (A) is organic fiber.

10. A molded article obtained by molding the molding composition according to claim 1.

11. A molded article obtained by molding the molding composition according to claim 2.

12. A resin composition comprising the components of at least one of (C) an unsaturated polyester having an acid value of 3 to 60 KOHmg/g and (D) an unsaturated polyester-polyamide having an acid value of 3 to 60 KOHmg/g and (B) an inorganic filler, wherein the component (B) has been internally added to at least one of the component (C) and (D) .
